# EUROPÄISCHE PATENTSCHRIFT

(11) **EP 0 761 999 B1**
(45) Veröffentlichungstag und Bekanntmachung des Hinweises auf die Patenterteilung: **20.10.1999**
(21) Anmeldenummer: 96113528.2
(22) Anmeldetag: 23.08.1996
(51) Int. Cl.: F16D 1/09

(54) **Vorrichtung zum Aneinanderkoppeln zweier Maschinenelemente**
Coupling device for two machine components
Dispositif de couplage pour deux éléments de machine

(30) Priorität: 23.08.1995 DE 19530959
(43) Veröffentlichungstag der Anmeldung: 12.03.1997
(73) Patentinhaber: Voith Turbo GmbH & Co. KG, 89522 Heidenheim (DE)
(72) Erfinder: Elsner Ernst, 89542 Herbrechtingen. (DE)
(74) Vertreter: Dr. Weitzel & Partner

(56) Entgegenhaltungen:
- WO-A-84/04367
- DE-A- 3 833 350
- DE-C- 4 019 746

## Beschreibung

Die Erfindung betrifft eine Vorrichtung zum Aneinanderkoppeln zweier Maschinenelemente, beispielsweise einer Welle und einer Nabe. Auf Voith-Druck 1338 7.94 und WO 84/04367 wird verwiesen.

Derartige Vorrichtungen haben sich in der Praxis bewährt. Sie werden dazu verwandt, zwei Maschinenelemente schnell miteinander zu verbinden und ebenso schnell wieder zu lösen. Ein typischer Anwendungsfall ist beispielsweise das Verbinden einer Welle mit einem Ritzel.

Wichtigstes Bauteil einer solchen Vorrichtung ist eine Buchse, die derart gestaltet ist, daß sie radial zwischen die beiden Maschinenelemente eingeschoben werden kann. Die Buchse weist einen Ringraum auf, der sich fast über die gesamte axiale Länge der Buchse hinweg erstreckt. Im Ringraum befindet sich ein Ringkolben, der in axialer Richtung innerhalb des Ringraumes verschiebbar ist. Der Ringkolben ist - in einem Axialschnitt gesehen - konisch gestaltet. An den axialen Enden des Ringraumes münden zwei Druckanschlüsse. Wird durch einen dieser Anschlüsse ein Druckmedium in den Ringraum eingelassen, so gerät dieses auf die eine axiale Stirnseite des Ringkolbens und verschiebt diesen zum anderen axialen Ende des Ringraumes hin. Der Kolben ist konisch, so daß er die Buchse in axialer Richtung aufweitet (expandiert), und damit einen Reibschluß zwischen der Buchse einerseits sowie den entsprechenden Flächen der beiden Maschinenelemente andererseits herstellt.

Nach dem Aufbringen eines Druckes auf die eine Stirnseite des Ringkolbens wird dieser innerhalb einer sehr kurzen ersten Zeitspanne in die andere Richtung verschoben. Sodann vergeht eine weitere - ebenfalls sehr kurze - Zeitspanne, bis sich die volle Anpreßkraft des Kolbens gegen die Radial äußere bzw. innere Spannfläche entwickelt hat. Diese genannten Zeitspannen - insbesondere die zweite Zeitspanne - ist von Vorrichtung zu Vorrichtung unterschiedlich groß.

Dies trifft in besonderem Maße für das Lösen des Ringkolbens aus seiner verkeilten Position zu. So ist die Zeitspanne bis zum "Losbrechen" des Ringkolbens aus der verriegelten in die entriegelte Position von Vorrichtung zu Vorrichtung unterschiedlich groß.

Jede Vorrichtung hat somit bezüglich des zeitlichen Ablaufes der genannten Vorgänge ihr eigenes Verhalten. Dies ist dann nachteilig, wenn es darauf ankommt, ein oder mehrere Paare von Maschinenelementen miteinander gleichzeitig zu verriegeln oder zu entriegeln. Die bekannten Vorrichtungen verhalten sich nicht synchron.

Es wäre wünschenswert, alle Druckanschlüsse mit nur einer einzigen Druckquelle zu speisen. Dies hat aber beim Lösen der Ringkolben den folgenden Nachteil:

Sobald der erste der beiden Ringkolben gelöst ist, fließt ein Leckölstrom an dessen Mantelfläche entlang in Richtung auf dessen Ende mit dem größeren Durchmesser. Hierdurch fällt der Druck im Ölsystem ab. Er kann einen derart niedrigen Wert erreichen, daß die anderen Ringkolben nicht mehr gelöst werden.

Der Erfindung liegt die Aufgabe zugrunde, eine Vorrichtung gemäß dem Oberbegriff von Anspruch 1 derart zu gestalten, daß eine Mehrfachanordnung möglich ist, bei welcher mehrere Ringkolben vorgesehen sind, und bei welcher sämtliche Druckanschlüsse von nur einer einzigen Druckquelle gespeist werden.

Diese Aufgabe wird durch die Merkmale von Anspruch 1 gelöst.

Eine erfindungsgemäße Vorrichtung arbeitet wie folgt:
Sollen bei einer Mehrfach-Vorrichtung - das heißt bei einer Vorrichtung, die zwei oder mehrere Ringkolben aufweist, - diese Ringkolben aus der gespannten in die gelöste Position verbracht werden, so wird auf die im Durchmesser kleinere Stirnfläche der Ringkolben Druck aufgegeben. Dazu ist es erforderlich das Mittel zur Realisierung der getrennten Druckbeaufschlagung der jeweils zum Lösen und zur Realisierung der Verspannung zu beaufschlagenden Druckanschlüsse der einzelnen Ringkammern vorgesehen werden müssen. Die einzelnen jeweils zum Lösen und zum Verspannen zu beaufschlagenden Druckanschlüsse sind dabei vorzugsweise über eine gemeinsame Verbindungsleitung mit der Druckmediumquelle gekoppelt. Als Mittel können Ventilanordnungen in unterschiedlicher Ausführung vorgesehen werden oder eine Hydraulikpumpe, welche wahlweise an die zu beaufschlagenden Druckanschlüsse angekuppelt werden kann.
Einer der Ringkolben wird sich sodann als erster aus seiner Spannposition lösen und sich in die gelöste Position bewegen. Aufgrund der erfindungsgemäßen Ausgestaltung der Stirnfläche des Ringkolbens mit dem größeren Durchmesser und der zugehörenden Sitzfläche sperrt diese Stirnfläche den dort befindlichen Druckanschluß ab. Es kann somit kein Lecköl dort abströmen. Deshalb kommt es auch nicht zu einem Druckabfall im Ölsystem. Der volle Druck steht somit auch für das Lösen der anderen Ringkolben zur Verfügung, so daß diese ebenfalls aus ihrer Spannposition gelöst werden.

Gemäß der Erfindung werden außerdem die Druckanschlüsse derart angeordnet, daß sie in den Stirnflächen des Ringraums münden, somit jenen Flächen, die den Stirnflächen des Ringkolbens genau gegenüberliegen. Sie münden somit nicht in den Umfangsflächen des Ringraumes, so wie dies bei den bekannten Vorrichtungen der Fall ist. Der einzelne Ringkolben und die Stirnflächen des Ringraumes sind, wie oben gesagt, derart ausgebildet, daß diese beiden wie ein Ventil miteinander zusammenarbeiten. Der Ringkolben stellt dabei den Ventilkörper dar, während die Stirnflächen des Ringraumes jeweils einen Ventilsitz bilden. Wird hierbei Drucköl auf die eine Stirnfläche des Ringkolbens aufgebracht, so bewegt sich dieser in die entsprechende Richtung, und legt sich an die andere Stirnfläche des Ringraumes an. Der dortige Druckanschluß wird hierdurch positiv abgesperrt.

Es versteht sich, daß sich die Erfindung auch dann anwenden läßt, wenn das eine Maschinenteil, beispielsweise eine Welle, mit einer Nabe zusammenzukoppeln ist, die gleichzeitig als Buchse im Sinne der Erfindung ausgebildet ist.

Außerdem kann der Ringkolben auch zylindrisch gestaltet sein, der Ringraum jedoch entsprechend konisch.

Die Erfindung ist anhand der Zeichnungen erläutert. Hierbei geht es um das Verbinden einer Welle 1 mit einem Ritzel 2. Zwischen Welle 1 und Ritzel 2 befinden sich zwei Vorrichtungen 3 von jeweils gleichem Aufbau. Der Einfachheit halber soll lediglich auf die links dargestellte Vorrichtung eingegangen werden. Man erkennt eine Buchse 3.1 sowie einen Ringkolben 3.2. Die Buchse 3.1 weist an ihren beiden Stirnseiten jeweils einen Anschluß 3.3 und 3.4 auf. Diese dienen zum Einlassen eines Druckmediums. Wie man sieht, münden die Anschlüsse 3.3 und 3.4 in der betreffenden Stirnwand 3.5, 3.6 der Buchse 3.1, der Stirnfläche des Ringkolbens 3.2 gegenüberliegend. Dabei sind die beiden Stirnflächen 3.7 des Ringkolbens 3.2 sowie die Stirnwände 3.5, 3.6 jeweils derart gestaltet, daß beim Anlegen des Kolbens 3.1 an die betreffende Stirnwand ein positives Absperren des Anschlusses 3.3 bzw. 3.4 erfolgt.

Die Druckbeaufschlagung der zum Lösen und Verspannen zu beaufschlagenden Druckanschlüsse - zum Lösen die Druckanschlüsse 3.4 und zum Verspannen die Druckanschlüsse 3.3 - erfolgt über eine hier im einzelnen nicht dargestellte Druckmediumquelle. Die einzelnen zum Lösen und zum Verspannen zu beaufschlagenden Druckanschlüsse sind jeweils über eine gemeinsame Verbindungsleitung mit der hier nicht dargestellten Druckmediumquelle gekoppelt.

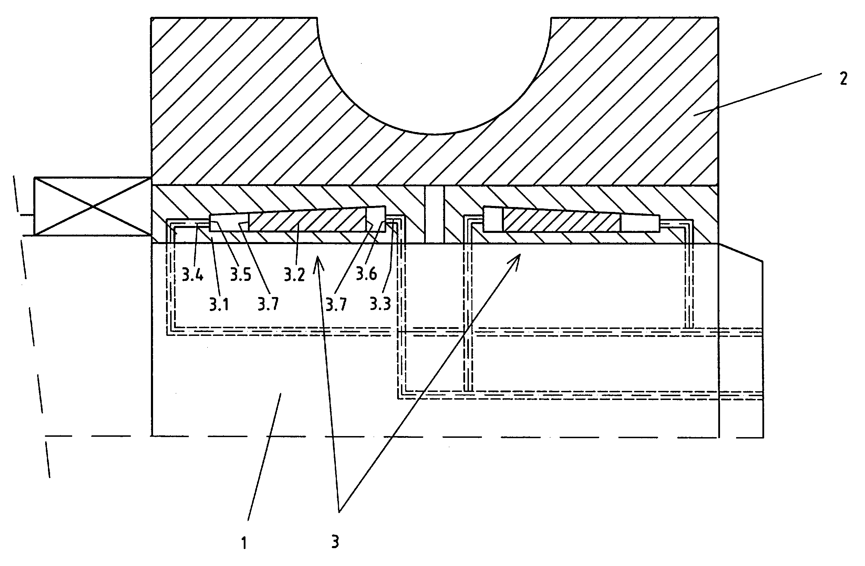

## Patentansprüche

1. Vorrichtung zum Aneinanderkoppeln zweier Maschinenelemente durch Herstellen einer reibschlüssigen Verbindung
1.1 mit einer Buchse (3.1) zum radialen Zwischenfügen zwischen die beiden Maschinenelemente (1,2);
1.2 die Buchse (3.1) weist einen Ringraum auf;
1.3 im Ringraum befindet sich ein Ringkolben (3.2), der in axialer Richtung verschiebbar ist, und der aufgrund der konischen Gestaltung des Ringraumes und/oder des Ringkolbens (3.2) in einer Axialposition eine Klemmwirkung erzeugt;
1.4 es sind an den axialen Enden des Ringraumes jeweils zwei Druckanschlüsse (3.3, 3.4) vorgesehen, um auf die betreffenden Stirnflächen (3.7) des Ringkolbens (3.2) ein Druckmedium zum Zwecke des gegenseitigen Verspannens der beiden Maschinenelemente (1,2) aufzubringen;
gekennzeichnet durch folgende Merkmale:
1.5 es sind zwei oder mehrere Ringräume mit darin enthaltenen Ringkolben (3.2) vorgesehen;
1.6 den Druckanschlüssen (3.3, 3.4) der einzelnen Ringräume ist eine einzige Druckmediumquelle zugeordnet;
1.7 die Druckanschlüsse (3.3, 3.4) münden jeweils in den Stirnwänden (3.5, 3.6) der Ringkammer;;
1.8 die im Durchmesser größere Stirnseite des einzelnen Ringkolbens (3.2) sowie die zugeordneten Stirnwände (3.6) sind derart ausgebildet, daß der betreffende Ringkolben (3.2) einen Ventilkörper, und die betreffende Stirnwand (3.6) einen Ventilsitz bilden;
1.9 es sind Mittel zur Realisierung der getrennten Druckbeaufschlagung der jeweils zum Lösen und zur Realisierung der Verspannung zu beaufschlagenden Druckanschlüsse der einzelnen Ringkammern vorgesehen.

2. Vorrichtung nach Anspruch 1, gekennzeichnet durch folgende Merkmale:
2.1 es sind eine Vielzahl von Buchsen (3.1) vorgesehen;
2.2 jede Buchse (3.1) weist wenigstens einen Ringraum auf.

3. Vorrichtung nach einem der Ansprüche 1 oder 2, dadurch gekennzeichnet, daß die jeweils zum Lösen und zum Verspannen zu beaufschlagenden Druckanschlüsse (3.3, 3.4) der einzelnen Ringräume über jeweils eine gemeinsame Verbindungsleitung - eine gemeinsame Verbindungsleitung für die zum Lösen zu beaufschlagenden Druckanschlüsse (3.4) und eine Verbindungsleitung für die zum Verspannen zu beaufschlagenden Druckanschlüsse (3.3) - mit der Druckmediumquelle gekoppelt sind.

4. Vorrichtung nach einem der Ansprüche 1 bis 3, dadurch gekennzeichnet, daß das Mittel eine zwischen Druckmediumquelle und Druckanschlüssen angeordnete Ventileinrichtung ist.

5. Vorrichtung nach einem der Ansprüche 1 bis 3, dadurch gekennzeichnet, daß das Mittel eine wahlweise an die zum Lösen oder zum Verspannen zu beaufschlagenden Druckanschlüsse ankuppelbare und als Druckmediumquelle ausgeführte Hydraulikpumpe ist.

## Claims

1. Device for coupling two machine elements by producing a non-frictional connection
1.1 with a bush (3.1) for radial insertion between the two machine elements (1, 2);
1.2 the bush (3.1) comprises an annular space;
1.3 in the annular space is an annular piston (3.2) which is displaceable in the axial direction and which, due to the conical design of the annular space and/or annular piston (3.2), produces a clamping effect in an axial position;
1.4 two respective pressure connections (3.3, 3.4) are provided at the axial ends of the annular space so as to apply to relevant end surfaces (3.7) of the annular piston (3.2) a pressure medium for the purpose of clamping the two machine elements (1, 2) together;
**characterised by** the following features:
1.5 two or more annular spaces containing annular pistons (3.2) are provided;
1.6 the pressure connections (3.3, 3.4) of the individual annular spaces are associated with a single pressure medium source;
1.7 the pressure connections (3.3, 3.4) merge respectively into the end walls (3.5, 3.6) of the annular chamber;
1.8 the diametrically larger end surface of the individual annular piston (3.2) as well as the associated end walls (3.6) are designed in such a manner that a respective annular piston (3.2) forms a valve body, and a respective end wall (3.6) forms a valve seat;
1.9 provided are means for achieving separate pressureloading of respective pressure connections of individual annular chambers which are to be loaded respectively for releasing and for establishing clamping.

2. Device according to Claim 1, **characterised by** the following features:
2.1 a plurality of bushes (3.1) is provided;
2.2 each bush (3.1) comprises at least one annular chamber.

3. Device according to one of Claims 1 or 2, **characterised in that** the pressure connections (3.3, 3.4) of the individual annular spaces, which are to be loaded respectively for releasing and clamping, are coupled to the pressure medium source via a common connecting pipe, a common connecting pipe for pressure connections (3.4) to be loaded for the purpose of releasing and a connecting pipe for pressure connections (3.3) to be loaded for the purpose of clamping.

4. Device according to one of Claims 1 to 3, **characterised in that** the means is a valve mechanism configured between pressure medium source and pressure connections.

5. Device according to one of Claims 1 to 3, **characterised in that** the means is a hydraulic pump, which is to be selectively connectible to pressure connections to be loaded for releasing or clamping and designed as a pressure medium source.

## Revendications

1. Dispositif pour accoupler entre eux deux éléments de machine par réalisation d'une liaison par adhérence
1.1 avec une douille 3.1 pour l'insertion radiale entre les deux éléments de machine (1, 2)
1.2 la douille (3.1) présente une chambre annulaire
1.3 dans la chambre annulaire se trouve un piston annulaire (3.2) qui peut être déplacé dans le sens axial et qui, en raison de la conception conique de la chambre annulaire et/ou du piston annulaire (3.2), génère un effet de blocage dans une position axiale
1.4 deux raccords de pression (3.3, 3.4) sont respectivement prévus aux extrémités axiales de la chambre annulaire pour appliquer un agent de pression sur les faces frontales (3.7) afférentes du piston annulaire (3.2) dans le but d'obtenir un bridage mutuel des deux éléments de machine (1, 2):
caractérisé par les caractéristiques suivantes:
1.5 deux ou plusieurs chambres annulaires comportant des pistons annulaires (3.2) à l'intérieur sont prévues;
1.6 une seule source d'agent de pression est affectée aux raccords de pression (3.3, 3.4) des différentes chambres annulaires;
1.7 les raccords de pression (3.3, 3.4) débouchent respectivement dans les parois frontales (3.5, 3.6) de la chambre annulaire;
1.8 la face frontale de plus grand diamètre du piston annulaire individuel (3.2) ainsi que les parois frontales afférentes (3.6) sont conformées de telle sorte que le piston annulaire correspondant (3.2) forme un corps de soupape et la paroi frontale afférente (3.6) un siège de soupape;
1.9 des moyens sont prévus pour réaliser la mise sous pression séparée des raccords de pression correspondants à charger des différentes chambres annulaires pour le desserrage et pour réaliser le bridage .

2. Dispositif selon la revendication 1, caractérisé par les caractéristiques suivantes:
2.1 il est prévu une multiplicité de douilles (3.1);
2.2 chaque douille (3.1) présente au moins une chambre annulaire.

3. Dispositif selon l'une des revendications 1 ou 2, caractérisé en ce que les raccords de pression respectifs (3.3, 3.4) des différentes chambres annulaires à charger pour le desserrage et le bridage sont accouplés à la source d'agent de pression par respectivement une conduite de liaison commune - une conduite de liaison commune pour les raccords de pression (3.4) à charger pour le desserrage et une conduite de liaison commune pour les raccords de pression (3.3) à charger pour le bridage.

4. Dispositif selon l'une des revendications 1 à 3, caractérisé en ce que le moyen est un dispositif à soupape placé entre la source d'agent de pression et les raccords de pression.

5. Dispositif selon l'une des revendications 1 à 3, caractérisé en ce que le moyen est une pompe hydraulique accouplable au choix aux raccords de pression à charger pour le desserrage ou pour le bridage et exécutée comme source d'agent de pression .
